## Europäisches Patentamt
## European Patent Office
## Office européen des brevets

(19)

(11) Publication number: **0 175 895**
A2

# (12) EUROPEAN PATENT APPLICATION

(21) Application number: **85109851.7**

(22) Date of filing: **06.08.85**

(51) Int. Cl.⁴: **F 02 B 19/08**
**F 02 M 59/20**

(30) Priority: **06.08.84 US 638232**

(43) Date of publication of application:
**02.04.86 Bulletin 86/14**

(84) Designated Contracting States:
**AT BE CH DE FR GB IT LI LU NL SE**

(71) Applicant: **Guidoboni, Laerte**
**Via Mezzofanti 23**
**I-40137 Bologna(IT)**

(72) Inventor: **Guidoboni, Laerte**
**Via Mezzofanti 23**
**I-40137 Bologna(IT)**

(74) Representative: **Franke, Karl Wilhelm, Dr.**
**Steinsdorfstrasse 10**
**D-8000 München 22(DE)**

(54) **Internal combustion engine.**

(57) An internal combustion engine is specifically designed for performing the thermodynamic cycle partly within a rotating motion means and partly within a reciprocating motion means, wherein the low pressure portion of the said cycle takes place within the totating motion means and the high pressure portion of the said cycle takes place within the reprocating motion means.

Special attention is given to the design of a cylinder head conceived for using a fuel suitable for a progressive combustion. The said cylinder head besides preferably two air inlet valves (2) includes an originally conceived thermically insulated chamber for mixture generation and precombustion. The said chamber is formed by a cylinder (4) preferably made of ceramic and driven into the casting forming the cylinder head for cooling from the outside, and it includes an electrically heatable metallic tube (8) which is disposed within the path of the injected fuel and may be passed by the mixture In rotating motion for initiating ignition and combustion thereof.

Fig. 2

## Internal Combustion Engine

The present invention relates to an internal combustion engine and is particularly concerned with improvements with regard to the thermodynamical cycle performed in such an engine.

In that respect this application is describing a further development of an internal combustine engine claimed and described in the European patent application 82103376.8 reference to which is made here with regard to the disclosure of details and features not particularly specified hereinafter.

In an internal combustion engine according to the present invention the thermodynamic cycle develops in two means. These two means first include a rotating motion means in which the intake and the first portion of the compression phase take place. The second means is a reciprocating motion means in which the second portion of the compression phase, the combustion and the first portion of the expansion phase are performed.

Pressurized air delivered by the rotating motion means is properly cooled by means of a peculiar heat exchanger and then at an equal pressure enters into the reciprocating motion means passing through valve openings provided in a cylinder head and through a port provided in a bottom section of a cylinder along a semicircle opposite to that where an exhaust port is disposed such that said pressurised air pushes ahead the burnt gases being at first at the same pressure towards the exhaust port. With an engine version fed with fuel suitable for progressive combustion, almost at the end of the second portion of the compression phase performed within the reciprocating motion means fuel injection is started into a special thermically isolated chamber provided separately but in fluid connection with the remaining portion of a combustion chamber. The fuel is injected at a pressure and a flow rate increasing little by little and in proportion to the air pressure in the feeding ducts up to the top

0175895

dead center. Afterwards, the pressure and flow rate for fuel injection are decreasing resulting in zero value when the crankshaft has been rotated after the top dead center through an angle which is a little bit greater than that at which, before the top dead center, the fuel injection has been started. Then, the expansion phase is beginning continuing until the piston starts opening the exhaust port for exhausting the burnt gases. These gases then are conveyed to a turbine where the last portion of the expansion and the final exhaust into the atmosphere take place. By continuing its expansion stroke the piston increases the exhaust area up to the bottom dead center and, shortly before reaching it, opens the scavenging port through which pressurized air enters having the same pressure as that which passing through the feeding duct and flowing past the valves enters into the cylinder at its top portion.

The process described above occurs at every running thus cutting the thermodynamic cycle as shown in a pV (pressure/volume) diagram into two parts separated by a sectional line running parallel to the axis of the abscissas. The cycle portion below the said sectional line, i. e. the low pressure portion, is performed inside the rotating motion means, whereas the cycle portion above the said sectional line, i. e. the high pressure portion, takes place inside the reciprocating motion means transforming thermal energy into mechanical energy.

The engine components for carrying out the said cycle as well as the cycle itself are the same both with the self-igniting version and with the spark-plug ignited version (described in the European patent application 82103376.8) of an internal combustion engine apart from the phases of mixture generation and combustion.

With the self-igniting version the mixture is generated and hit as follows. The piston when moving upwards pushes the air inside the combustion chamber. Entering into a central cylindrical area and into an external crown simultaneously the air is pressurising the burnt gases contained therein in a top area.

Shortly before the piston reaches the top dead center, the injection means start injecting fuel which, in the same way as with the gasoline fed engine version, set itself on a cone-shaped surface meeting a metallic cylinder, at high temperature, in its central area, wherein the combustion starts. The input of fuel at high pressure and its subsequent combustion stop the introduction of air into the central cylindrical area at first; then, since air continues to be pushed upwards, it enters into the crown only also being piped from the top thus creating a rotative motion around the metallic cylinder. The combustion going on gases rising from the bottom of the cylinder meet with the air current rising towards the crown and upon reaching the top section lap the metallic cylinder being in an incandescent state and, at the outside, lap the isolated wall which, consequently, is always warmed. Leaving there they again enter into the central cylindrical area within which they are mixed with the fuel still being injected. Thus a space of high temperature filled with considerably moving air in excess is created which causes the fuel to be ignited. The rotatory motion around the metallic cylinder goes on to some extent after the top dead center when the expansion effect of the piston starts to be felt stopping the circulating motion, and consequently, the fuel still being introduced is burning while going towards the combustion chamber limited by the piston the combustion thus diverging to the outside. The injection of fuel is stopped, as soon as the crankshaft after the top dead center has moved through an angle which is greater than that run-through from the start of fuel injection to the top dead center.

Both the starting point and the stopping point for the fuel injection situated astride the top dead center are variable according to power de-rating but the ratio between the rotation angle for the whole injection stroke and the rotation angle for fuel injection before the top dead center has a fixed value for every running. That means that the injection time is maximum at full power and is reduced in accordance with power de-rating but is always astride the top dead center with the same proportions between the periods before and after the top dead center.

The very gist of the present invention is defined in the appended claims which relate to the basic design of an internal combustion engine as well as to structural details thereof specially conceived for the purposes of the present invention.

An internal combustion engine for performing the thermodynamic cycle according to the present invention comprises components or members already disclosed in the European patent application 82103376.8 possibly modified and components or members newly and particularly designed for the purposes of this invention.

The first type of engine members comprises the reciprocating motion means including special cooling and temperature homogenising circuits, lubrication means, exhaust manifold, feeding and scavenging ducts and ports and a peculiar heat exchanger showing variations with regard to the cylinder head and to the injector position. The same applies to the rotating motion means bearing an electric motor for a high number of revolutions on a shaft connecting a turbine with a booster compressor. The function of the said electric motor is to start the engine and to operate now and then in some particular moment, at minimal foreseen runnings. Also the injection pump and the injector are of the type disclosed in the European patent application 82103376.8 but show variations due to the higher pressure required. Moreover, the phase adjustment system is connected with the power variation control accelerator to advance the ignition end in proportion with the delay by which the said accelerator has drawn the ignition starting.

The main engine member included ex-novo or modified with respect to those being part of the gasoline fed and sparking-plug ignited engine version for performing the thermodynamic cycle when using gas-oil type or kerosene fuels is the cylinder head which is of the flat type and houses two feeding valves and a specific chamber for mixture generation and combustion.

For a detailed explanation of the present invention and its advantages reference is now made to the accompanying drawings in which:

Fig. 1 is a diagrammatic view from above on a cylinder head of a preferred embodiment for an internal combustion engine according to the present invention;

Fig. 2 is a vertical section through the cylinder head shown in Fig. 1 taken along the line A - A in Fig. 1;

Fig. 3 to 6 show four subsequent stages of the operation of an internal combustion engine comprising a cylinder head as shown in Fig. 1 and 2;

Fig. 7 to 10 show the basic structure and some details of the fuel injection system from the European patent application 82103376.8 for use in connection with an internal combustion engine according to the present invention.

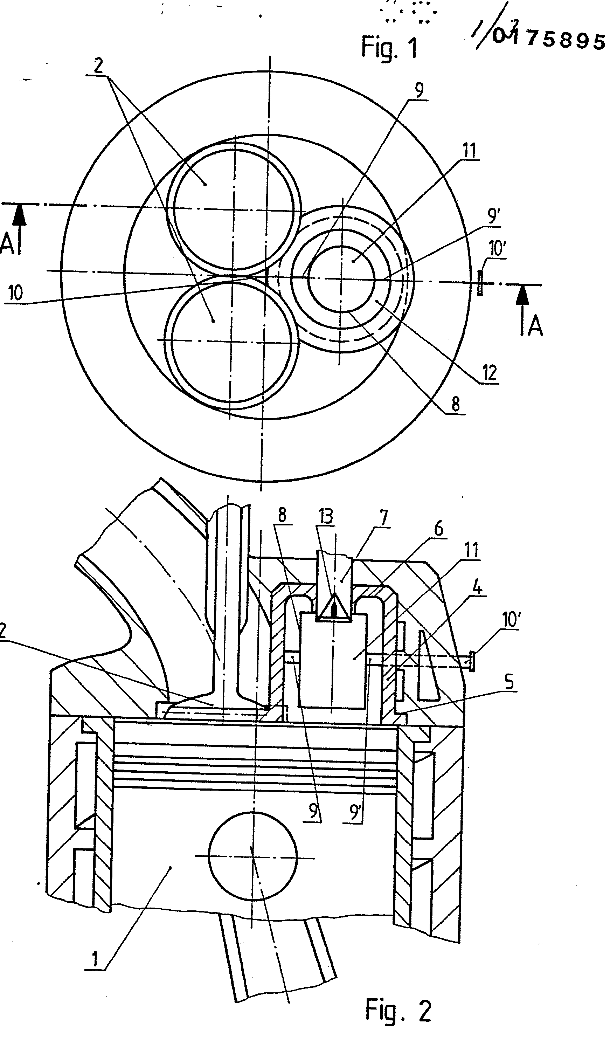

Referring to Fig. 1 and 2, there is shown the upper portion of one cylinder of the reciprocating motion means of an internal combustion engine according to the present invention having a novel and originally designed type of cylinder head including an originally conceived thermically isolated chamber for fuel injection and mixture generation and combustion.

The cylinder head shown in Fig. 1 and 2 houses two air inlet valves 2 disposed in the area where the cylinder head faces the head of a piston 1 reciprocating within a cylinder below the cylinder head and defining an expansion chamber therein. Moreover, the cylinder head, in the area between the two valves 2 and the opposite semicircumference, includes the cylindrical chamber for mixture generation and combustion which forms one of the main novel features of the present invention for carrying out the thermodynamic cycle when gas-oil type or kerosene fuels are to be used.

The said chamber is formed by a cylinder 4 made of ceramic or of a similarly isolating material and open towards the piston 1. The high temperature resistant cylinder 4 is driven into the casting forming the cylinder head and is kept in place by a turned edge 5 surrounding the open bottom of the cylinder 4. At the opposite end the cylinder 4 has a closed top where along the axis of the cylinder 4 an injector 7 is inserted for fuel injection. Moreover, within the cylinder 4 and coaxial thereto, a cylindrical metallic tube 8 made of wolfram or tungsten or of an equivalent material is disposed which is kept in place within the cylinder 4 by means of two blades 9 and 9' which are made of the same material as that of the tube 8 and are electrically connected to taps 10 and 10' respectively the one of which (10') being a current tap whereas the other one (10) is grounded such that current may be flown through the tube 8 for heating it up to an incandescent state. Geometrically, the tube 8 divides the interior of the cylinder 4 into a central cylindrical area 11 and a coaxial external crown 12. The injector 7 disposed at the top of the cylinder 4 coaxially extends into the tube 8 to a certain extent and has a cone-shaped outlet which at its base is crossed by a traverse bar 6 forming the support for a pinhole 13 which thus is placed in front of the fuel outlet hole so contributing to better crumbling the fuel to little drops and simultaneously forcing them to spread on a conical surface meeting the tube 8 in its central area.

The special cylinder head including the thermically insulated chamber formed by the ceramic cylinder 4 as described above plays an important role in performing the thermodynamic cycle in an internal combustion engine according to the present invention. in the course of that cycle, considering the engine version fed with a fuel suitable for a progressive combustion, the fuel injection into the said thermically insulated chamber starts almost at the end of the compression phase performed in the reciprocating motion means of the internal combustion engine.

The fuel is injected at a pressure and flow rate increasing little by little and in proportion to the air pressure in the feeding ducts up to the top dead center of the crankshaft and piston 1. Thereafter, the pressure and flow rate for fuel injection are decreasing and reach the zero value when the crankshaft has been rotated through an angle from the top dead center a little bit greater than that angle between the start of the fuel injection and the top dead center. Therefrom, the expansion phase starts and continues until the piston 1 opens the exhaust port in the cylinder to release burnt gases. The said gases are conveyed to a turbine forming a part of the rotating motion means for completing the expansion phase and exhaust into the atmosphere. Continuing its expansion stroke the piston 1 increases the exhaust area until the bottom dead center and shortly before reaching it opens the scavenging port for the entrance of pressurized air having the same pressure as the air flowing through the feeding duct and past the valves 2 into the cylinder.

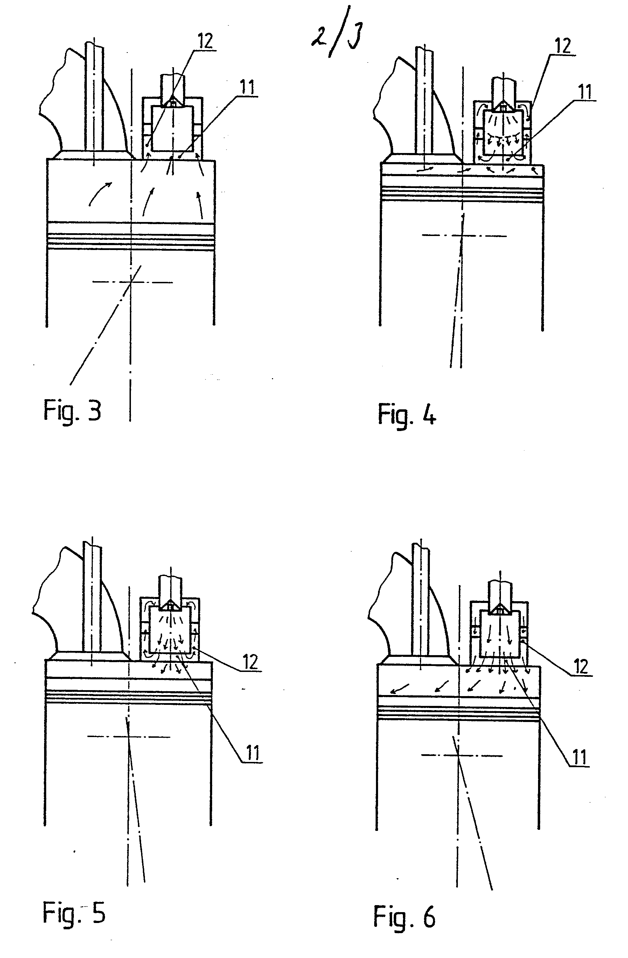

With the self-ignition version of the engine the mixture is generated and hit in the thermically insulated chamber as illustrated in Fig. 3 to 6. The piston 1, in its upward stroke, pushes the air inside the combustion chamber. Entering into the central cylindrical area 11 and into the outside crown 12 simultaneously the air is pressuring the burnt gases contained therein in the top area (Fig. 3). Shortly before the piston 1 reaches the top dead center, the injector 7 starts injecting the fuel which, in the same way as with the gasoline fed version of the engine, stes itself on a cone-shaped surface that goes to strike the metallic tube 8, at high temperature, in its central area, whereby the combustion is initiated. The fuel inlet at high pressure and its further combustion do stop the air inlet into the central cylindrical area 11 at first; then, since air continues to be pushed upwards, it enters into the crown 12 only also being piped from the top thus creating a rotative motion around the metallic tube 8 as shown in Fig. 4. The gases, while the combustion is continuing, come out from the bottom of the cylindrical area 11 meeting the air flow rising towards the crown 12 and rising together with it reach the top section lapping the incandescent metallic tube 8 and, at the outside, the insulating wall of the ceramic cylinder 4 which wall, consequently, is always warmed as shown in Fig. 5. From here they come again to the central area 11 wherein they mix with the fuel still being injected, and that hits since it finds a high temperature room with air in excess and sensible motion. Such a rotatory motion around the metallic tube 8 goes on in some extent after the top dead center when the expansion effect of the piston 1 begins to be sensed that stops the circulating motion, and consequently, the fuel still entering is burning while moving towards the expansion chamber limited by the piston 1 wherein the combustion diverges towards the outside as shown in Fig. 6. The fuel injection is stopped as soon as the crankshaft, after the top dead center, has performed a rotation greater than that from the starting point of fuel injection up to the top dead center. Both the starting point and the stopping point for the fuel injection, astride the top dead center, are variable according to power de-rating, but the ratio between the rotation angle during which the whole injection stroke takes place and the rotation angle during which the injection portion before the top dead center is performed remains unchanged at any running. In other words, the injection time is the maximum at full power and is reduced as de-rating takes place, standing however always astride the top dead center, with the same proportions between the distances before and after the top dead center.

Once more, special attention is drawn to the original structure of the cylinder head purposely conceived to carry out the thermodynamic cycle using gas-oil type or kerosene fuels. An essential part of the said cylinder head is the thermically insulated chamber for performing mixture generation, ignition and combustion, the components of the mixture being in continuous but never whirling (verticose) motion. Moreover, it is to be noted that the injector 7 is specially designed differring from that disclosed in the European patent application 82103576.8 reference to which is only made as to the position of the pinhole 13 which serves to generate a conus of little drops during spraying action. With the present invention, that pinhole 13 is connected to the injector 7 itself instead of to the duct and is disposed within a highly heated space containing the metallic tube 8 which, by passing electric current therethrough, may be brought to incandescent condition. Being in that condition the tube 8 hits the air-and-fuel mixture passing around it when flowing from the central cylindrical area 11 to the crown 12 and striking the said mixture promotes the combustion thereof. As soon as the tube 8 is in incandescent condition, the electric current passed through it via the blades 9, 9' and the taps 10, 10' is interrupted. As mentioned above, during the compression phase, the piston 1 forces the air to enter into the cylindrical area 11 and into the crown 12, but as soon as the injector 7 starts spraying, at first it slows down the air inlet into the cylindrical area 11 and calls back air from the crown 12 through the connection on top. Then rotating motion is increasing more and more, while continuing to introduce fuel which while going downwards hits being deviated and piped into the crown 12 by fluid flow towards it. The ceramic cylinder 4 on its outside being in contact with the casting forming the cylinder head and by the passage of coolant is cooled while its inside always is kept at a high temperature since it consists of insulating material and since the burnt gases stagnate therein for a longer period of time and air is entering only when being at high temperature. The metallic tube 8 maintains a high temperature because it is heated by means of electric current whenever its temperature is falling under a certain limit and because it remains fully immersed in the gases during the combustion phase.

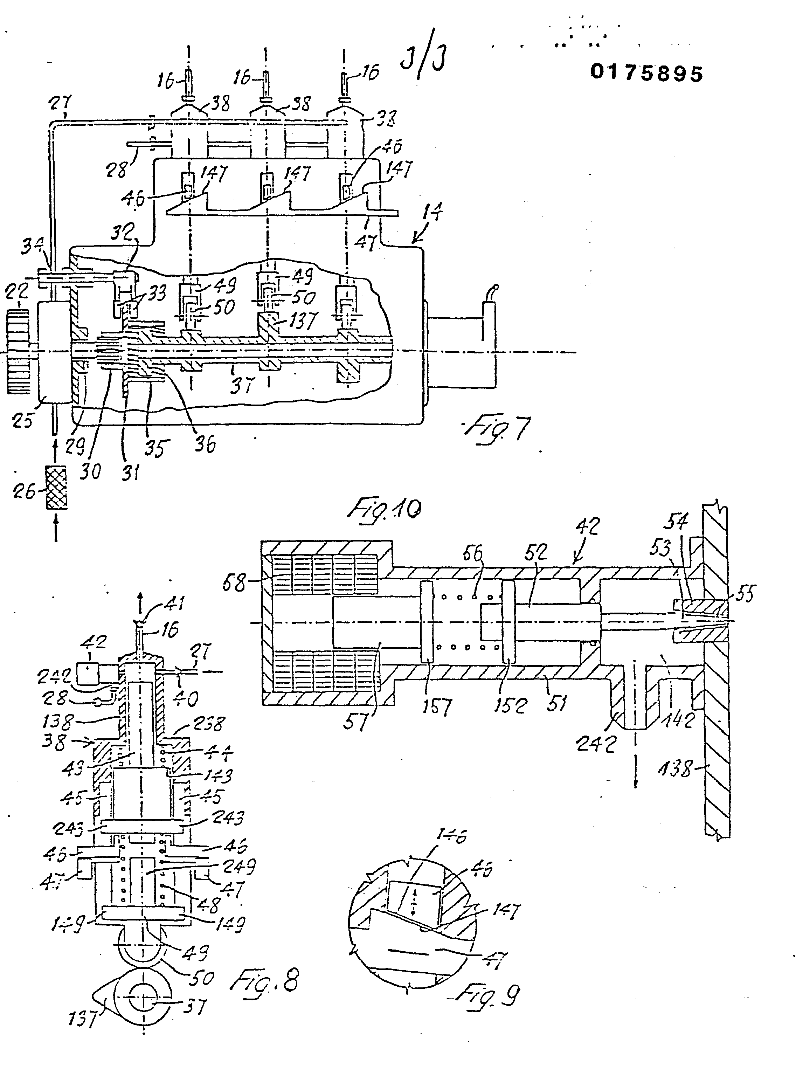

For completing the disclosure some details with regard to the fuel injection system already mentioned in the European patent application 82103376.8 referred to above shall be repeated hereafter referring to Fig. 7 to 10 of the drawings.

A fuel injection apparatus 14 shown in Fig. 7 to 10 comprises an injection pump 25 which takes its drive from the crankshaft with a fixed drive ratio of 1 : 1, in consideration of the fact that the pump shaft must effect the same number of revolutions as the crankshaft. The driving pulley 22 of the injection apparatus 14 is driven by a belt from the crankshaft.

The pulley 22 actuates the pump 25 which sucks fuel from the fuel tank through a filter 26 and forces it into a pipe 27 feeding the several injection units 38; exceeding fuel passes through a pipe 28 also collecting fuel discharged from the discharge valve for conveying it back into the fuel tank.

A shaft 29 projecting out of the pump 25 presents a splined head portion coupled in axially slidable manner with a sleeve 30 carrying an outer disc 31 the periphery of which is engaged by a fork 32 which is shiftable forwards and backwards parallel to the shaft 29 and at its ends carries a pair of idle rollers 33 for engaging the disc 31. The axial movement of the fork 32 is controlled by means of an actuation rod 34.

Coaxially to the sleeve 30 and to the disc 31 a further sleeve 35 is disposed for common rotation which presents inner helical or inclined grooves for coupling with an outer toothing at the end 36 of a camshaft 37. The fork 32, through the actuation rod 34, can be moved forward and backward with the camshaft rotating or not to modify the angular position between the driving shaft 29 and the camshaft 36 for advancing or retarding the fuel injection. Each injection unit 38 comprises a hollow cylinder 138 receiving fuel from the pipe 27 through a nonreturn valve 40. The cylinder 138 at its closed top end is provided with another nonreturn valve 41 permitting the delivery of fuel from the interior of the cylinder 138 through a pipe 16 to the injector. Opposite to the pipe 27 the cylinder 138 includes a discharge valve 42. Within the cylinder 138 a small piston 43 is slidably mounted. The downward movement of the piston 43 creates a hollow space which is filled by fuel entering through the pipe 27 and past the valve 40, whereas an upward movement of the piston 43 forces fuel under pressure to flow out through the pipe 16 and past valve 41 and, possibly, past the discharge valve 42.

The piston 43 is urged downwards by a spring 44 acting on an annular step 143 on the piston 43 and on a corresponding enlarged portion 238 of the cylinder 138. At the enlarged diameter base portion of the piston 43 two diametrically opposed projections 243 are provided which engage corresponding longitudinal slots 45 in the cylinder 138 and are supported by two slide members 46 which at their bottom sides present an inclined plane surface 146 cooperating with similarly inclined surfaces 147 on control rods 47 such that axial movement backwards and forwards of the control rods 47 actuated by the accelerator will cause upward or downward movement of the slide members 46 to control the downward stroke of the piston 43 for defining the exact volume of the fuel for filling the cylinder 138.

The bottom of the piston 43 is upwardly biased by a spring 48 which with its other end bears against diametrically opposed projections 149 of a fork-shaped roller-carrying member 49 which carries a freely rotatable cam follower roller 50 bearing against a cam 137 on the camshaft 37. The projections 149 are slidably guided in the slots 45 of the cylinder 138 also guiding the projections 243 on the piston 43. The member 49 comprises an upwardly directed abutment head 249 for cooperation with the bottom end of the cylinder 43.

Rotation of the camshaft 37, through the cam follower roller 50 bearing on the the cam 137, causes lifting of the member 49 against the action of the spring 48 which is compressed but because of the counterpressure of the fuel in the upper hollow space of the cylinder 138 and of the counter action of the spring 44 urging the piston 43 downwards cannot displace the piston 43 upwards. A lifting of the piston 43 will occur only when the abutment head 249 of the member 49 will abut against the bottom of the cylinder 43 pushing it upwards. Then, further upward movement of the member 49 caused by the profile of the cam 137 will result in lifting the piston 43 which will force fuel to flow out through the duct 16 and past valve 41. Having reached the peak point determined by the profile of the cam 137 the piston which has ejected the desired amount of fuel from the cylinder 138 starts to descend until abutting against the slide members 46, while a new dose of fuel is introduced into the hollow space formed in the cylinder 138 due to the enforced feeding through the pipe 27 and past the valve 40. The roller-carrying member 49 continues to descend, since it is urged to permanent contact with the cam 137 by the spring 48.

The discharge valve 42 which serves for dosing and discharging fuel from the cylinder 138 comprises a cylindrical hollow body 51 within which a piston-like member 52 is axially slidably mounted which at its end carries a closure needle 53 cooperating with a correspondingly shaped valve seat 54 on the wall of the cylinder ·138 for controlling the opening and closing of a passage 55 from the interior of the cylinder 138 to a discharge chamber 142 of the discharge valve 42. The chamber 142 is connected to the fuel tank through an outlet port 242 and a suitable pipe. Normally, the passage 55 is closed by the needle 53 since the member 52 is urged to the closure position of the needle valve under the action of a spring 56 bearing at one end against a flanged portion 152 of the member 52 and at the other end against a head portion 157 of a movable core 57 of an electromagnet 58 disposed in axial alignment with the member 52 and the needle 53.

When the engine is not running and the central control unit does not feed current to the electromagnet 58, the core 57 can move and the spring 56 is extended. When the central control unit feeds current to the electromagnet 58, the core 57 is more or less expelled depending on the strength of the said current, and the spring 56, consequently, is more or less compressed. As a consequence, more or less counterpressure from the fuel inside the cylinder 138 will be required to overcome the force of the spring 56 to move the needle 53 away from the seat 54 and to open the passage 55. Moreover, since the bearing surface of the spring 56 is more or less spaced from the passage 55 depending on the strength of the current fed to the electromagnet 58 the opening movement of the needle 53 and the opening degree of the needle valve will be proportional to the displacement of the said bearing surface (at constant values of fuel pressure).

The central control unit determines the strength of the current fed to the electromagnet 58 depending on the pressure and the temperature in the inlet ducts to the cylinders and on the temperature of the cylinder head. In other words, the central control unit controls the ratio between the air sucked in through the feeding ducts and the injected fuel.

Claims
======

1. An internal combustion engine, characterised in that the thermodynamic cycle is completely performed through two means, the first one of which is a rotating motion means and the second one of which is a reciprocating motion means, said rotating motion means for performing the low pressure portion of the thermodynamic cycle comprising a connecting shaft carrying two rotors having a turbo-blower bearing mounted therebetween and a high rpm electric motor and said reciprocating motion means for transforming thermal energy into mechanical energy comprising a combustion chamber for generating and burning a mixture during rotation of a crankshaft through a rotation angle varying according to power de-rating but always situated astride a top dead center position, the fluid motion through said reciprocating motion means throughout the cycle development tending towards one direction only.

2. The engine of claim 1, characterised in that the fuel injection is performed by an electronically adjusted mechanical pump in which the stroke of pins is changed on command through the accelerator by a device stopping its downward stroke thus allowing a quantity of fuel to enter and simultaneously allowing the compression stroke to start the later the smaller is the quantity of fuel to be pressurized and in which the spark advance adjusting system of the cams driving the stroke of the pins is connected with the accelerator such that the accelerator when driving a delayed injection simultaneously advances the end of the injection always keeping it, with any power de-rating, astride the top dead center, while, simultaneously, the quantity of fuel pressurized by each pin may be partially discharged by a special valve controlled by the electronic control unit opening the valve more or less in accordance with the feeding air pressure and the engine revolution speed.

3. The engine of claim 1 or 2, characterised in that, with feeding of gas-oil (Diesel oil) or similar fuel, a cylinder head is provided housing a mixture generating and combustion chamber (4) fully open towards the cylinder, said chamber (4) being thermically insulated and containing a heatable member (8) for initiating the ignition of the mixture which, in the first portion of the combustion phase, rotates around said member (8) before entering into the cylinder for complete combustion.

4. The engine of claim 3, characterised in that the mixture generating and combustion chamber is formed by a cylinder (4) made of ceramic or a similar heat resistant material and driven into the casting forming the cylinder head for thermal contact and cooling from the outside.

5. The engine of claim 3 or 4, characterised in that the heatable member is a metallic tube (8), preferably made of tungsten or a similarly heat resistant metal which may be heated electrically up to an incandescent condition.

6. The engine of claim 5, characterised in that the metallic tube (8) is suspended within the cylinder (4) and coaxial thereto by means of two blades (9, 9') serving as current connectors for feeding heating current through the tube (8).

7. The engine of claim 5 or 6, characterised in that the metallic tube (8) divides the interior of the cylinder (4) into a central cylindrical area (11) and a coaxial outer crown (12), both being fully open towards the piston (1) and having fluid communication with each other past the upper border of the tube (8) for rotating motion of the mixture around the tube (8) along its inside and outside.

8. The engine of one of the claims 3 to 7, characterised in that a fuel injector (7) is disposed at the top of the chamber (4) to spray fuel in the form of small droplets along a conical surface intersecting the heatable member (8).

9. The engine of claim 8, characterised in that the fuel injector (7) includes a pinhole (13) disposed at its open end in the interior of the heatable member (8).

10. The engine of one of the claims 3 to 9, characterised in that the cylinder head in addition to the mixture generating and combustion chamber (4) comprises two air inlet valves (2) disposed adjacent to a semicircumference opposite to that including the chamber (4).

Fig. 1

0175895

Fig. 2

0175895

2/3

Fig. 3

Fig. 4

Fig. 5

Fig. 6

3/3

0175895

Fig.7

Fig.10

Fig.8

Fig.9